# EUROPÄISCHE PATENTSCHRIFT

(11) **EP 2 880 328 B1**
(45) Veröffentlichungstag und Bekanntmachung des Hinweises auf die Patenterteilung: **24.10.2018**
(21) Anmeldenummer: 13758729.1
(22) Anmeldetag: 01.08.2013
(51) Int. Cl.: F16D 13/75, B23K 26/38, B26F 3/00

(54) **VERFAHREN ZUR HERSTELLUNG EINER SPERR- UND/ODER ANTRIEBSKLINKE FÜR EINE VERSCHLEIßNACHSTELLEINRICHTUNG EINER KUPPLUNGSVORRICHTUNG**
METHOD FOR PRODUCING A DETENT AND/OR DRIVING PAWL FOR A SLACK ADJUSTER OF A COUPLING DEVICE
PROCÉDÉ DE FABRICATION D'UN CLIQUET D'ARRÊT ET/OU D'ENTRAÎNEMENT POUR UN DISPOSITIF DE RATTRAPAGE D'USURE D'UN DISPOSITIF D'ACCOUPLEMENT

(30) Priorität: 02.08.2012 DE 102012213680
(43) Veröffentlichungstag der Anmeldung: 10.06.2015
(73) Patentinhaber: Schaeffler Technologies AG & Co. KG, 91074 Herzogenaurach (DE)
(72) Erfinder: GÜTLE, Martin, 77654 Offenburg (DE); HURLE, Tanja, 76437 Rastatt (DE)
(86) Internationale Anmeldenummer: PCT/DE2013/200090
(87) Internationale Veröffentlichungsnummer: WO 2014/019585

(56) Entgegenhaltungen:
- DE-A1-102009 019 070
- DE-A1-102009 035 225
- DE-A1-102011 018 319
- DE-A1-102011 101 557

## Beschreibung

Die vorliegende Erfindung betrifft ein Verfahren zur Herstellung einer Sperr- und/oder Antriebsklinke für eine Verschleißnachstelleinrichtung einer Kupplungsvorrichtung gemäß dem Oberbegriff des Patentanspruchs 1.

Aus der DE 10 2009 035 225 A1 ist eine Kupplungsvorrichtung mit einer in axialer Richtung ein- und ausrückbaren, im eingerückten Zustand reibschlüssigen Drehmomentübertragungseinrichtung und einer Verschleißnachstelleinrichtung bekannt. Die Verschleißnachstelleinrichtung weist einen drehbaren Verstellring, einen auf den Verstellring wirkenden, drehbar gelagerten Spindeltrieb mit einem eine Zahnstruktur aufweisenden Antriebsritzel, eine mit der Zahnstruktur des Antriebsritzels in Eingriff bringbare Sperrklinke zur Sperrung einer Drehung des Spindeltriebs und eine mit der Zahnstruktur des Antriebsritzels in Eingriff bringbare Antriebsklinke zur Drehung des Spindeltriebs im Verschleißfall auf. Die Sperrklinke ist als Stanzbauteil ausgebildet und weist mehrer Klinkenzungen auf. Somit offenbart die DE 10 2009 035 225 A1 ein Verfahren zur Herstellung einer Sperr- und/oder Antriebsklinke für eine Verschleißnachstelleinrichtung einer Kupplungsvorrichtung gemäß dem Oberbegriff des Patentanspruchs 1.

Es ist Aufgabe der vorliegenden Erfindung, ein Verfahren zur Herstellung einer Sperr- und/oder Antriebsklinke anzugeben, durch das die Nachstellgenauigkeit der Kupplungsvorrichtung verbessert werden kann.

Erfindungsgemäß gelöst wird diese Aufgabe durch ein Verfahren zur Herstellung einer Sperr- und/oder Antriebsklinke für eine Verschleißnachstelleinrichtung einer Kupplungsvorrichtung gemäß Patentanspruch 1 zur Sperrung und/oder Drehung eines an einem drehbar gelagerten, auf einen drehbaren Verstellring wirkenden Spindeltrieb vorgesehenen Antriebsritzels mit einer Zahnstruktur, wobei die Sperr- und/oder Antriebsklinke zumindest zwei Klinkenzungen aufweist, die in wechselnden Eingriff mit der Zahnstruktur des Antriebsritzels bringbar sind, wobei die Klinkenzungen zumindest teilweise mittels eines Laser- oder Wasserstrahls aus einem Sperr- und/oder Antriebsklinkenrohling ausgeschnitten werden, und der Abstand zwischen zwei benachbarten Klinkenzungen der Schnittbreite des Laser- oder Wasserstrahls entspricht.

Hierdurch können besonders viele Klinkenzungen bei gleichbleibender Breite der Sperrklinke oder Antriebsklinke untergebracht werden. Ferner ermöglicht dies eine besonders zügige Herstellung der Sperrklinke oder Antriebsklinke, da der Laserstrahl oder der Wasserstrahl bei der Bearbeitung des Sperrklinkrohlings oder des Antriebsklinkenrohlings nur ein einziges Mal die Klinkenlänge zurücklegen muss, um den Spalt zwischen zwei benachbarten Klinkenzungen herzustellen und die beiden benachbarten Klinkenzungen voneinander trennen zu können.

Bevorzugte Ausführungsbeispiele der vorliegenden Erfindung sind in den abhängigen Ansprüchen dargelegt.

Vorzugsweise werden die Klinkenzungen nacheinander mittels des Laser- oder Wasserstrahls aus dem Sperr- und/oder Antriebsklinkenrohling ausgeschnitten.

Weiterhin ist es von Vorteil, wenn das Ausstanzen des Sperr- und/oder Antriebsklinkenrohlings und das Ausschneiden der Klinkenzungen mittels des Laser- oder Wasserstrahls in derselben Maschine erfolgt. Insbesondere ist es von Vorteil, wenn das Ausstanzen des Sperr- und/oder Antriebsklinkenrohlings und das Ausschneiden der Klinkenzungen mittels des Laser- oder Wasserstrahls in derselben Aufspannung erfolgt. Hierdurch ist eine besonders kostengünstige Herstellung der Sperr- und/oder Antriebsklinke möglich.

Gemäß einem bevorzugten Ausführungsbeispiel ist der Abstand zwischen zwei benachbarten Klinkenzungen kleiner als 1,0 mm. Vorzugsweise ist der Abstand zwischen zwei benachbarten Klinkenzungen kleiner als 0,5 mm. Gemäß einem besonders bevorzugten Ausführungsbeispiel liegt der Abstand zwischen zwei benachbarten Klinkenzungen zwischen 0,25 mm und 0,05 mm.

Es ist von Vorteil, wenn die Klinkenzungen in einer Ebene angeordnet sind. Dabei ist es möglich und vorteilhaft, wenn die Sperrklinke oder die Antriebsklinke als einlagige Sperrklinke oder Antriebsklinke ausgebildet ist. Insbesondere bei Sperrklinken ist es jedoch auch möglich, die Sperrklinken zwei- oder mehrlagig auszubilden, das heißt die Klinkenzungen in axialer Richtung der Kupplungsvorrichtung in zwei oder mehreren Lagen übereinander anzuordnen. Hierdurch kann die Nachstellgenauigkeit weiter verbessert werden.

Vorzugsweise ist die Sperr- und/oder Antriebsklinke als Blechbauteil ausgebildet, dessen Dicke kleiner als 2,0 mm ist. Vorzugsweise ist die Dicke kleiner als 1,5 mm, und insbesondere vorzugsweise kleiner als 1,0 mm.

Die vorgenannte Aufgabe wird ferner erfindungsgemäß gelöst durch eine Kupplungsvorrichtung mit zumindest einer in axialer Richtung ein- und ausrückbaren, im eingerückten Zustand reibschlüssigen Drehmomentübertragungseinrichtung und zumindest einer Verschleißnachstelleinrichtung, die zumindest einen drehbaren Verstellring, zumindest einen auf den Verstellring wirkenden, drehbar gelagerten Spindeltrieb mit einem eine Zahnstruktur aufweisenden Antriebsritzel, zumindest eine mit der Zahnstruktur des Antriebsritzels in Eingriff bringbare Sperrklinke zur Sperrung einer Drehung des Spindeltriebs und zumindest eine mit der Zahnstruktur des Antriebsritzels in Eingriff bringbare Antriebsklinke zur Drehung des Spindeltriebs im Verschleißfall aufweist, wobei die Sperrklinke und/oder die Antriebsklinke als Sperr- und/oder Antriebsklinke nach zumindest einem der vorangegangenen Ausführungsbeispiele ausgebildet ist.

Die Drehmomentübertragungseinrichtung weist vorzugsweise zumindest eine Anpressplatte, zumindest eine Gegendruckplatte und zumindest eine in axialer Richtung zwischen der Anpressplatte und der Gegendruckplatte angeordnete Kupplungsscheibe auf. Die Anpressplatte ist drehfest in einem Gehäuse der Kupplungsvorrichtung angeordnet und bezüglich der Gegendruckplatte in axialer Richtung begrenzt verlagerbar, während die Gegendruckplatte gehäusefest angeordnet ist. Wenn die Kupplungsscheibe im eingerückten Zustand der Kupplungsvorrichtung bzw. der Drehmomentübertragungseinrichtung zwischen der Anpressplatte und der Gegendruckplatte verspannt ist, erfolgt eine reibschlüssige Übertragung des Drehmoments von der Eingangsseite der Kupplungsvorrichtung, über die Anpressplatte und die Gegendruckplatte auf die Kupplungsscheibe, und von der Kupplungsscheibe auf die Ausgangsseite der Kupplungsvorrichtung, beispielsweise auf die Eingangswelle eines Getriebes.

Durch ein oder mehrere Hebelelemente kann die Anpressplatte in axialer Richtung verlagert werden. Durch eine auf das Hebelelement wirkende Aktoreinrichtung kann die Kupplungsvorrichtung bzw. die Drehmomentübertragungseinrichtung eingerückt bzw. ausgerückt werden. Bei dem Hebelelement kann es sich um eine Tellerfeder, wie sie üblicherweise bei normal-eingerückten Kupplungsvorrichtungen zum Einsatz kommt, oder um eine Hebelfeder, wie sie üblicherweise bei normal-ausgerückten Kupplungsvorrichtungen zum Einsatz kommt, handeln.

Wenn die Kupplungsvorrichtung als normal-eingerückte Kupplungsvorrichtung ausgebildet ist, überwiegt die Kraft der einrückenden Tellerfeder, die auf die Anpressplatte wirkt, im betätigungsfreien Zustand die Kraft von ausrückenden Blattfedern, die auf die Anpressplatte wirken. Bei der Betätigung wird die Tellerfeder durch die Aktoreinrichtung mit einer Kraft beaufschlagt, durch die die Kupplung ausgerückt wird. Andererseits kann die Kupplungsvorrichtung aber auch als normal-ausgerückte Kupplungsvorrichtung ausgebildet sein, das heißt als Kupplung, bei der die Kraft der ausrückenden Blattfedern, die auf die Anpressplatte wirken, im betätigungsfreien Zustand die Kraft der Hebelfeder, die auf die Anpressplatte wirkt, überwiegt. Bei der Betätigung wird die Hebelfeder durch die Aktoreinrichtung mit einer Kraft beaufschlagt, durch die die Kupplung eingerückt wird.

Die Kupplungsvorrichtung kann gleichermaßen als gedrückte Kupplungsvorrichtung, das heißt als Kupplungsvorrichtung, bei der die Aktoreinrichtung eine drückende Kraft auf die Tellerfeder bzw. die Hebelfeder ausübt, oder als gezogene Kupplungsvorrichtung, das heißt als Kupplungsvorrichtung, bei der die Aktoreinrichtung eine ziehende Kraft auf die Tellerfeder bzw. die Hebelfeder ausübt, ausgebildet sein. Ferner kann die Kupplungsvorrichtung einerseits als Trockenkupplung und andererseits als Nasskupplung ausgebildet sein.

In diesem Zusammenhang ist es möglich, die Kupplungsvorrichtung als Einscheiben- oder Mehrscheibenkupplung oder als Lamellenkupplung auszubilden. Darüber hinaus kann die Kupplungsvorrichtung als Einzelkupplung ausgebildet sein, das heißt eine einzige Drehmomentübertragungseinrichtung mit einer Anpressplatte, einer Gegendruckplatte und einer dazwischen klemmbaren Kupplungsscheibe aufweisen, kann jedoch auch als Mehrfachkupplung, insbesondere als Doppelkupplung, ausgebildet sein. Die Doppelkupplung kann zwei voneinander getrennte Drehmomentübertragungseinrichtungen aufweisen, weist vorzugsweise jedoch zwei Drehmomentübertragungseinrichtungen mit einer gemeinsamen Gegendruckplatte, die in diesem Zusammenhang auch als Zentralplatte bezeichnet wird, auf.

Bei der Verschleißnachstelleinrichtung handelt es sich vorzugsweise um eine wegbasierte Verschleißnachstelleinrichtung. Der Verstellring der Verschleißnachstelleinrichtung ist in axialer Richtung zwischen der Anpressplatte und dem Hebelelement, insbesondere an einem Kraftrand der Tellerfeder, klemmbar gelagert. Auf seiner dem Hebelelement abgewandten Oberfläche weist der Verstellring Rampen auf, die gleitbeweglich auf Gegenrampen angeordnet sind, so dass bei einer relativen Verdrehung des Verstellrings die Rampen des Verstellrings an den Gegenrampen entlanggleiten, wodurch sich der Abstand zwischen der Anpressplatte und der der Anpressplatte abgewandten Oberfläche des Verstellrings, mit der der Verstellring in Anlage am Hebelelement ist, verändert. Vorzugsweise sind die Gegenrampen einteilig mit der Anpressplatte ausgebildet, und insbesondere in die Anpressplatte eingelassen.

Bei der Verschleißnachstelleinrichtung erfolgt die Sensierung von Kupplungsverschleiß dadurch, dass beim Einrücken der Kupplungsvorrichtung bzw. der Drehmomentübertragungseinrichtung eine Klinkenzunge der Antriebsklinke einem Zahn der Zahnstruktur des Antriebsritzels überspringt, und beim anschließenden Ausrücken der Kupplungsvorrichtung bzw. der Drehmomentübertragungseinrichtung in den nachfolgenden Zahngrund einrastet.

Dabei erfolgt die Verschleißnachstellung, indem durch die am Antriebsritzel eingerastete Klinkenzunge der Antriebsklinke das Antriebsritzel in Nachstellrichtung angetrieben wird, wodurch die Spindelwelle des Spindeltriebs verdreht wird. Die rotatorische Bewegung der Spindelwelle wird in eine translatorische Bewegung der Spindelmutter umgesetzt. Die translatorische Bewegung der Spindelmutter wird durch Eingriff in den Verstellring in eine rotatorische Bewegung des Verstellrings umgesetzt, durch die die Rampen des Verstellrings an den Gegenrampen hochgleiten. Da die Verschleißnachstellung während des Ausrückens der Kupplungsvorrichtung bzw. der Drehmomentübertragungseinrichtung erfolgt, ist der Verstellring klemmkraftfrei, so dass die Verschleißnachstellung unmittelbar erfolgen kann und keine Zwischenspeicherung der Antriebsenergie erfolgreich ist.

Zur Verschleißnachstellung rastet die Klinkenzunge der Antriebsklinke in den dem übersprungenen Zahn nachfolgenden Zahngrund ein, so dass die Antriebsklinke mit der Zahnstruktur des Antriebsritzels in einen im Wesentlichen formschlüssigen Eingriff gebracht wird. "Im Wesentlichen formschlüssig" bedeutet in diesem Zusammenhang, dass der Eingriff überwiegend formschlüssig erfolgt, jedoch auch kraftschlüssige Anteile aufweisen kann, insbesondere durch eine elastische Vorspannung der Antriebsklinke.

Die vorliegende Erfindung wird nachfolgend anhand von bevorzugten Ausführungsbeispielen in Verbindung mit den zugehörigen Figuren näher erläutert. In diesen zeigen:
- Figur 1: eine perspektivische Ansicht eines Beispiels einer Kupplungsvorrichtung ohne Kupplungsdeckel und Hebelelement,
- Figur 2: eine Schnittansicht der Kupplungsvorrichtung aus Figur 1 mit Kupplungsdeckel und Hebelelement, und
- Figur 3: ein Beispiel einer Sperrklinke einer Verschleißnachstelleinrichtung, die in der Kupplungsvorrichtung in den Figuren 1 und 2 angeordnet ist.

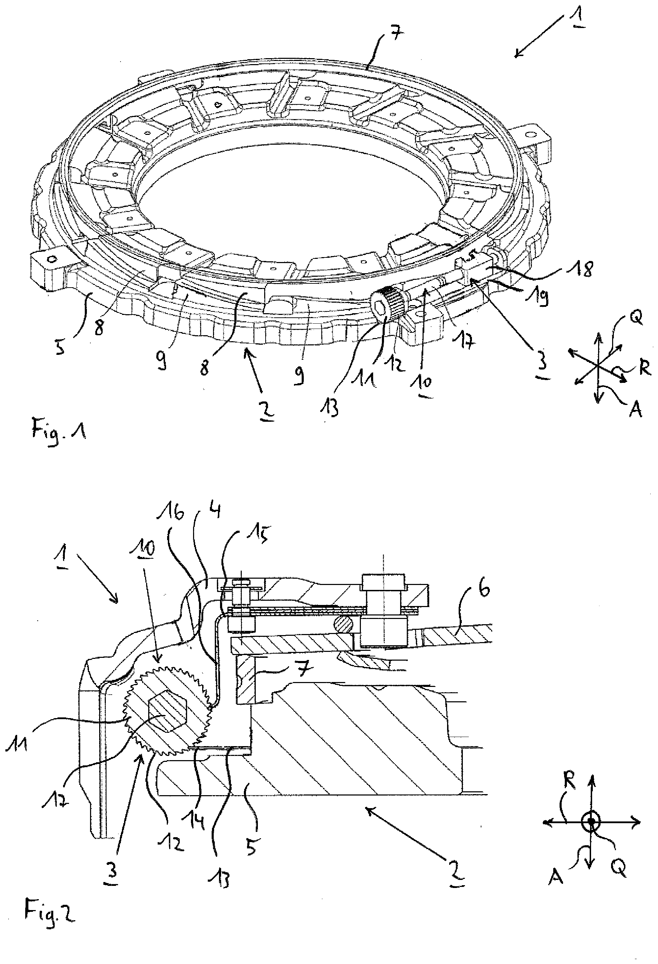

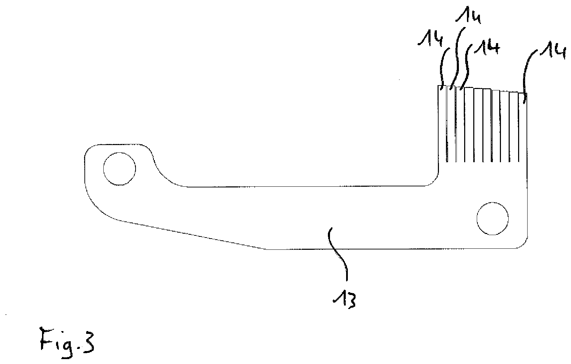

Die Figuren 1 und 2 betreffen ein Beispiel einer Kupplungsvorrichtung 1 für ein Kraftfahrzeug. Die Figur 3 betrifft ein Beispiel einer Sperr- und/oder Antriebsklinke 13, 15 für eine Verschleißnachstelleinrichtung 3 der Kupplungsvorrichtung 1, wobei exemplarisch nur eine Sperrklinke 13 dargestellt ist. Die Erläuterungen zur Sperrklinke 13 gelten jedoch gleichermaßen für die Antriebsklinke 15 der Verschleißnachstelleinrichtung 3.

Ferner betreffen die nachfolgenden Ausführungsbeispiele ein Verfahren zur Herstellung der Sperr- und/oder Antriebsklinke 13, 15 für die Verschleißnachstelleinrichtung 3. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele des Verfahrens zur Herstellung der Sperr- und/oder Antriebsklinke 13, 15, die Teilkombinationen oder Teilschritte der im Folgenden zu erläuternden Merkmale oder Verfahrensschritte aufweisen.

Die in den Figuren 1 und 2 dargestellte Kupplungsvorrichtung 1 ist drehbar um eine Zentralachse gelagert und weist zumindest eine Drehmomentübertragungseinrichtung 2 auf. Die Drehmomentübertragungseinrichtung 2 weist zumindest eine Anpressplatte 5, zumindest eine nicht dargestellte Gegendruckplatte und zumindest eine in axialer Richtung A der Kupplungsvorrichtung 1 zwischen der Anpressplatte 5 und der Gegendruckplatte angeordnete, nicht dargestellte Kupplungsscheibe auf. Die Gegendruckplatte ist mit einem Gehäusebauteil der Kupplungsvorrichtung 1, insbesondere einem Kupplungsdeckel 4, fest verbunden, insbesondere verschraubt. Die Anpressplatte 5 ist im Kupplungsgehäuse, insbesondere innerhalb des Kupplungsdeckels 4, drehfest gelagert und in axialer Richtung A der Kupplungsvorrichtung 1 begrenzt verlagerbar. Insbesondere ist die Anpressplatte 5 mittels mehrerer, nicht dargestellter Blattfedern drehfest im Kupplungsgehäuse befestigt und von der Gegendruckplatte weg, das heißt mit Bezug auf die Figuren 1 und 2 nach oben, vorgespannt.

Darüber hinaus weist die Kupplungsvorrichtung 1 ein Hebelelement 6 auf, das für eine normal-eingerückte Kupplungsvorrichtung 1 als Tellerfeder und für eine normal-ausgerückte Kupplungsvorrichtung 1 als Hebelfeder ausgebildet sein kann. Das Hebelelement 6 ist gehäuseseitig abgestützt und durch eine Aktoreinrichtung betätigbar. Die gehäuseseitige Abstützung kann beispielsweise durch eine am Kupplungsdeckel 4 befestigte Lagereinheit erfolgen, durch die das Hebelelement 6 verkippbar aufgehängt ist. Hierzu weist die Lagereinheit beispielsweise zwei in axialer Richtung A der Kupplungsvorrichtung 1 beabstandete Drahtringe oder einen Drahtring und eine dazu in axialer Richtung A beabstandete Ringfeder auf, zwischen denen das Hebelelement 6 sich in radialer Richtung R der Kupplungsvorrichtung 1 erstreckt. Über nicht dargestellte Hebelspitzen, die in radialer Richtung R auf der Innenseite des vorzugsweise im Wesentlichen ringförmig ausgebildeten Hebelelements 6 angeordnet sind, ist das Hebelelement 6 durch die Aktoreinrichtung betätigbar.

In seinem radialen Außenbereich weist das Hebelelement 6 einen Kraftrand auf. Über einen Verstellring 7, der der Verschleißnachstelleinrichtung 3 zuzuordnen ist, auf die im Folgenden eingegangen wird, wirkt das Hebelelement 6 mittelbar auf die Anpressplatte 5, indem der Kraftrand des Hebelements 6 an einer hebelelementseitigen, der Anpressplatte 5 abgewandten Oberfläche des Verstellrings 7 anliegt und im eingerückten Zustand der Kupplungsvorrichtung 1 bzw. der Drehmomentübertragungseinrichtung 2 Druck auf den Verstellring 7 ausübt. Dieser Druck wird über die anpressplattenseitige, dem Hebelelement 6 abgewandten Oberfläche des Verstellrings 7 auf die Anpressplatte 5 übertragen.

Bei der normal-eingerückten, in den Figuren 1 und 2 dargestellten Kupplungsvorrichtung 1, überwiegt die wirksame Kraft des als Tellerfeder ausgebildeten Hebelelements 6 die Gegenkraft der Blattfedern, während bei einer normal-ausgerückten Kupplungsvorrichtung 1 die Gegenkraft der Blattfedern die wirksame Kraft des als Hebelfeder ausgebildeten Hebelelements 6 überwiegt. Dementsprechend führt eine Betätigung der Tellerfeder der normal-eingerückten, in den Figuren 1 und 2 dargestellten Kupplungsvorrichtung 1 zum Ausrücken der Kupplungsvorrichtung 1 durch Verkippen bzw. Umschnappen der Tellerfeder, das heißt zum Abhub der Anpressplatte 5 und zur Entfernung der Anpressplatte 5 von der Gegendruckplatte, während eine Betätigung der Hebelfeder bei einer normal-ausgerückten Kupplungsvorrichtung 1 zum Einrücken der Kupplungsvorrichtung 1 durch Verkippen der Hebelfeder führt.

Bei eingerückter Drehmomentübertragungseinrichtung 2 wird ein Drehmoment von der Eingangsseite der Kupplungsvorrichtung 1, beispielsweise von einem Zweimassenschwungrad, über das Kupplungsgehäuse und sowohl die Gegendruckplatte als auch die Anpressplatte 5, die beide mit dem Kupplungsgehäuse, insbesondere dem Kupplungsdeckel 4, drehfest verbunden sind, reibschlüssig auf die Kupplungsscheibe übertragen. Von der Kupplungsscheibe, die reibschlüssig zwischen der Gegendruckplatte und der Anpressplatte 5 geklemmt ist, wird das Drehmoment zur Ausgangsseite der Kupplungsvorrichtung 1 übertragen, beispielsweise zu einer Eingangswelle eines Getriebes.

Da aufgrund des Reibschlusses sowohl die Reibbeläge der Kupplungsscheibe, als auch in geringerem Maße die Reibflächen der Gegendruckplatte und der Anpressplatte 5 einem Verschleiß unterworfen sind, muss über die Lebensdauer der Kupplungsvorrichtung 1 die Anpressplatte 5 immer näher an die Gegendruckplatte heranbewegt werden, um die Abnahme der Dicke der Reibbeläge und der Stärke der Reibflächen in axialer Richtung A zu kompensieren und den Reibschluss herstellen bzw. die Drehmomentübertragungseinrichtung 2 einrücken zu können. Hierzu ist in der Kupplungsvorrichtung 1 die bereits zuvor erwähnte Verschleißnachstelleinrichtung 3 ausgebildet.

Zusätzlich zum zuvor erwähnten Verstellring 7 weist die Verschleißnachstelleinrichtung 3 einen Spindeltrieb 10 auf, auf dem bzw. auf dessen Spindelwelle 17 ein Antriebsritzel 11 drehfest angeordnet ist. Der gesamte Spindeltrieb 10 ist durch zumindest einen Spindelhalter 19 drehbar auf Seiten der Anpressplatte 5 gelagert, wobei der Spindelhalter 19 beispielsweise mit einer der Kupplungsscheibe abgewandten Seite der Anpressplatte 5 verbunden, insbesondere verschraubt oder vernietet, ist.

Über eine Spindelmutter 18 ist der Spindeltrieb 10 mit dem Verstellring 7 wirkverbunden, wobei eine Drehbewegung des Spindeltriebs 10 in eine translatorische Bewegung der Spindelmutter 18 umgesetzt wird, und die translatorische Bewegung der Spindelmutter 18 in eine Drehbewegung des Verstellrings 7 umgesetzt wird. Vorzugsweise ist der Verstellring 7 als Rampenring ausgebildet. Rampen 8 des Verstellrings 7 sind gleitbeweglich auf Gegenrampen 9 angeordnet, die auf der der Kupplungsscheibe abgewandten Seite der Anpressplatte 5 ausgebildet sind, vorzugsweise in die Anpressplatte 5 eingelassen sind.

Das Antriebsritzel 11 ist auf seiner Mantelfläche mit einer Zahnstruktur 12 versehen, die eine bestimmte Teilung bzw. Zahnweite aufweist. Ein freies Ende der Antriebsklinke 15 ist ausgebildet, im Wesentlichen formschlüssig in die Zahnstruktur 12 des Antriebsritzels 11 eingreifen zu können.

Die Antriebsklinke 15 weist zwei oder mehr als zwei Klinkenzungen 16 auf, die das freie Ende der Antriebsklinke 15 bilden. Die Klinkenzungen 16 der Antriebsklinke 15 sind in Querrichtung Q der Kupplungsvorrichtung 1 nebeneinander angeordnet und erstrecken sich im Wesentlichen in axialer Richtung A der Kupplungsvorrichtung 1 in Richtung des Antriebsritzels 11, um mit dessen Zahnstruktur 12, vorzugsweise abwechselnd, in formschlüssigen Eingriff gelangen zu können. Hierzu weisen die beiden Klinkenzungen 16 vorzugsweise einen Längenunterschied auf, der geringer ist als die Teilung der Zahnstruktur 12 des Antriebsritzels 11. Vorzugsweise sind die Klinkenzungen 16 in radialer Richtung R der Kupplungsvorrichtung 1 gegen das Antriebsritzel 11 vorgespannt, so dass der Eingriff zusätzlich auch einen kraftschlüssigen Anteil aufweisen kann.

Alternativ oder zusätzlich ist die Antriebsklinke 15 in axialer Richtung A der Kupplungsvorrichtung 1 gegen das Antriebsritzel 11 vorgespannt. Hierzu weist die Antriebsklinke 15 vorzugsweise einen Federabschnitt auf, der in die Klinkenzungen 16 übergeht. Der Federabschnitt der Antriebsklinke 15 erstreckt sich vorzugsweise im Wesentlichen in radialer Richtung R der Kupplungsvorrichtung 1 und ist mit dem Kupplungsgehäuse, insbesondere dem Kupplungsdeckel 4, verbunden, beispielsweise verschraubt oder vernietet. Im dargestellten Beispiel ist der Federabschnitt auf der Innenseite des Kupplungsdeckels 4 angeordnet. Jedoch ist es auch möglich, dass der Federabschnitt auf der Außenseite des Kupplungsdeckels 4 angeordnet ist, so dass sich die Klinkenzungen 16 durch eine Aussparung im Kupplungsdeckel 4 nach innen zum Antriebsritzel 11 erstrecken.

Die elastische Vorspannung des Federabschnitts gegen den Kupplungsdeckel 4 bzw. in axialer Richtung A der Kupplungsvorrichtung 1 kann durch ein Vorspannblech unterstützt werden. Über einen Anschlag, der beispielsweise mit dem Kraftrand des Hebelelements 6 oder mit der hebelelementseitigen Oberfläche des Verstellrings 7 in Anlage bringbar ist bzw. sich in Anlage befindet, kann das Vorspannblech vom Federabschnitt abgehoben werden, um bei Axialschwingungen der Anpressplatte 5 im ausgerückten Zustand der Drehmomentübertragungseinrichtung 1 eine ungewollte Verschleißnachstellung und/oder eine Beschädigung der Verschleißnachstelleinrichtung 3, insbesondere der Klinkenzungen 16 der Antriebsklinke 15 bei blockiertem Spindeltrieb 10, zu verhindern. Insbesondere kann durch den Anschlag der mögliche Relativweg zwischen der Antriebsklinke 15 und dem Antriebsritzel 11 des Spindeltriebs 10 begrenzt werden.

Obwohl die dargestellten Beispiele der Antriebsklinke 15 zwei Klinkenzungen 16 aufweisen, ist es möglich, dass die Antriebsklinke 15 nur eine einzige Klinkenzunge oder mehr als zwei Klinkenzungen aufweist. Erfindungsgemäß werden zwei oder mehr als zwei Klinkenzungen 16 der Antriebsklinke 15 mittels eines Laserstrahls oder mittels eines Wasserstrahls ausgeschnitten. Dies ermöglicht eine besonders genaue Herstellung der Klinkenzungen 16, und ermöglicht insbesondere beim Einsatz mehrerer Klinkenzungen 16, den Abstand zwischen in Querrichtung Q benachbarten Klinkenzungen zu minimieren.

Wird die Drehmomentübertragungseinrichtung 2 bzw. die Kupplungsvorrichtung 1 eingerückt, bewegt sich die Anpressplatte 5 auf die Gegendruckplatte zu, das heißt mit Bezug auf die Figuren 1 und 2 nach unten. Hierbei gleiten die freien enden der Klinkenzungen 16 der Antriebsklinke 15 über eine Zahnflanke der Zahnstruktur 12 des Antriebsritzels 11. Liegt ein hinreichender Kupplungsverschleiß vor, muss sich die Anpressplatte 5 weiter auf die Gegendruckplatte zubewegen, so dass schließlich ein freies Ende zumindest einer Klinkenzunge 16 der Antriebsklinke 15 die auf die Zahnflanke folgende Zahnspitze überspringt.

Beim anschließenden der Drehmomentübertragungseinrichtung 2 rastet das freie Ende der besagten Klinkenzunge 16 in den der übersprungenen Zahnspitze folgenden Zahngrund ein. Während der Ausrückbewegung, das heißt während die Anpressplatte 5 sich unter Vorspannung der Blattfedern mit Bezug auf die Figuren 1 und 2 nach oben bewegt, und der Verstellring 7 klemmkraftfrei ist, treibt die Antriebsklinke 15 das Antriebsritzel 11 in einer ersten Drehrichtung, mit Bezug auf Figur 2 im Uhrzeigersinn, an. Mit dem Antriebsritzel 11 dreht sich der gesamte Spindeltrieb 10, der die Drehbewegung in eine translatorische Bewegung der Spindelmutter 18 umsetzt. Durch die translatorische Bewegung der Spindelmutter 18 wird der beim Ausrücken klemmkraftfreie Verstellring 7 gedreht, so dass sich die Rampen 8 des Verstellrings 7 an den in die Anpressplatte 15 eingelassenen Gegenrampen 9 hochbewegen. Hierdurch vergrößert sich der Abstand zwischen der hebelelementseitigen Kontaktfläche des Verstellrings 7 und der Anpressplatte 5 so weit, bis der Kupplungsverschleiß, bezogen auf das Hebelelement 6, wegmäßig kompensiert worden ist.

Während der Betätigung der Kupplungsvorrichtung 1 besteht die Möglichkeit, dass die Antriebsklinke 15 das Antriebsritzel 11 der Verschleißnachstelleinrichtung 3 in die falsche Richtung dreht, das heißt entgegen des eigentlich zu kompensierenden Kupplungsverschleißes. Unter anderem kann diese Problematik durch Axialschwingungen der Anpressplatte 5 bei ausgerückter Drehmomentübertragungseinrichtung 2 oder während des Einrückens auftreten, beispielsweise wenn die Klinkenzunge 16 in radialer Richtung R zu stark gegen das Antriebsritzel 11 vorgespannt ist. Daher weist die Verschleißnachstelleinrichtung 3 vorzugsweise zumindest eine Sperrklinke 13 auf, die ausgebildet und angeordnet ist, das Antriebsritzel 11 gegen eine Rückdrehung, das heißt gegen eine Verdrehung entgegen der ersten Drehrichtung, zu sperren.

Die Sperrklinke 13 weist zwei oder mehr als zwei Klinkenzungen 14 auf. Die Klinkenzungen 14 sind zumindest teilweise mittels eines Laserstrahls oder eines Wasserstrahls aus einem Sperrklinkenrohling ausgeschnitten.

Die Klinkenzungen 14 der Sperrklinke 13 sind in Querrichtung Q der Kupplungsvorrichtung 1 nebeneinander angeordnet. Die Gesamtbreite der Sperrklinke 13 in Querrichtung Q entspricht im Wesentlichen der Breite des Antriebsritzels 11, wobei sicherzustellen ist, dass jede der Klinkenzungen 14 der Sperrklinke 13 in Eingriff mit der Zahnstruktur 12 des Antriebsritzels 11 kommen kann.

Der Längenunterschied zwischen der kürzesten Klinkenzunge 14 der Sperrklinke 13 und der längsten Klinkenzunge 14 der Sperrklinke 13 ist vorzugsweise kleiner als die Teilung der Zahnstruktur 12 des Antriebsritzels 11. Dadurch wird zum einen sichergestellt, dass sich jeweils nur eine einzelne Klinkenzunge 14 der Sperrklinke 13 in Eingriff mit der Zahnstruktur 12 des Antriebsritzels 11 befindet, während zum anderen eine möglichst feinstufige Sperrwirkung der Sperrklinke 13 auf das Antriebsritzel 11 erreicht wird.

Die nachfolgenden Erläuterungen treffen sowohl auf die Klinkenzungen 14 der Sperrklinke 13, als auch auf die Klinkenzungen 16 der Antriebsklinke 15 zu. Der Abstand zwischen zwei benachbarten Klinkenzungen 14 der Sperrklinke 13 oder zwischen zwei benachbarten Klinkenzungen 16 der Antriebsklinke 15 entspricht der Schnittbreite des Laserstrahls oder des Wasserstrahls. Vorzugsweise ist der Abstand zwischen zwei benachbarten Klinkenzungen 14, 16 kleiner als 1,0 mm, vorzugsweise kleiner als 0,5 mm, und liegt insbesondere vorzugsweise in einem Bereich zwischen 0,25 mm und 0,05 mm.

Hierdurch ist es beispielsweise möglich, bei gleichbleibender Breite des Antriebsritzels 11 in Querrichtung Q der Kupplungsvorrichtung 1 und gleichbleibender Breite der Klinkenzungen 14 die Sperrklinke 13 statt mit den bisher üblichen sechs Klinkenzungen 14 mit zehn Klinkenzungen 14 auszustatten. Dementsprechend kann die Abstufung der Längen der Klinkenzungen 14 feiner erfolgen, wodurch die Sperrwirkung verfeinert wird. Da die Breite der Klinkenzungen 14 in Querrichtung Q konstant gehalten wird, wird die Stabilität der Sperrklinke 13 beim formschlüssigen Eingriff der jeweiligen Klinkenzunge 14 in die Zahnstruktur 12 des Antriebsritzels 11 nicht beeinträchtigt.

Die Klinkenzungen 14, 16 sind vorzugsweise in einer Ebene angeordnet. Weiterhin vorzugsweise ist die Sperrklinke 13 und/oder die Antriebsklinke 15 jeweils als Blechbauteil ausgebildet. Die Dicke des Blechbauteils ist vorzugsweise kleiner als 2,0 mm, vorzugsweise kleiner als 1,5 mm, und insbesondere vorzugsweise kleiner als 1,0 mm.

Die Klinkenzungen 14, 16 der Sperrklinke 13 bzw. der Antriebsklinke 15 werden vorzugsweise nacheinander mittels des Laserstrahls oder mittels des Wasserstrahls aus dem Sperrklinkenrohling bzw. dem Antriebsklinkenrohling ausgeschnitten.

Weiterhin ist es von Vorteil, wenn das Ausstanzen des Sperrklinkenrohlings bzw. des Antriebsklinkenrohlings und das Ausschneiden der Klinkenzungen 14, 16 mittels des Laserstrahls oder mittels des Wasserstrahls in derselben Maschine, vorzugsweise in derselben Aufspannung, erfolgt.

### Bezugszeichenliste

- 1: Kupplungsvorrichtung
- 2: Drehmomentübertragungseinrichtung
- 3: Verschleißnachstelleinrichtung
- 4: Kupplungsdeckel
- 5: Anpressplatte
- 6: Hebelelement
- 7: Verstellring
- 8: Rampen
- 9: Gegenrampen
- 10: Spindeltrieb
- 11: Antriebsritzel
- 12: Zahnstruktur
- 13: Sperrklinke
- 14: Klinkenzunge
- 15: Antriebsklinke
- 16: Klinkenzunge
- 17: Spindelwelle
- 18: Spindelmutter
- 19: Spindelhalter
- A: axiale Richtung
- R: radiale Richtung
- Q: Querrichtung

## Patentansprüche

1. Verfahren zur Herstellung einer Sperr- und/oder Antriebsklinke (13, 15) für eine Verschleißnachstelleinrichtung (3) einer Kupplungsvorrichtung (1) zur Sperrung und/oder Drehung eines an einem drehbar gelagerten, auf einen drehbaren Verstellring (7) wirkenden Spindeltrieb (10) vorgesehenen Antriebsritzels (11) mit einer Zahnstruktur (12), wobei die Sperr- und/oder Antriebsklinke (13, 15) zumindest zwei Klinkenzungen (14, 16) aufweist, die in wechselnden Eingriff mit der Zahnstruktur (12) des Antriebsritzels (11) bringbar sind, **dadurch gekennzeichnet, dass** die Klinkenzungen (14, 16) zumindest teilweise mittels eines Laser- oder Wasserstrahls aus einem Sperr- und/oder Antriebsklinkenrohling ausgeschnitten werden, und der Abstand zwischen zwei benachbarten Klinkenzungen (14, 16) der Schnittbreite des Laser- oder Wasserstrahls entspricht.

2. Verfahren nach Anspruch 1, wobei die Klinkenzungen (14, 16) nacheinander mittels des Laser- oder Wasserstrahls aus dem Sperr- und/oder Antriebsklinkenrohling ausgeschnitten werden.

3. Verfahren nach Anspruch 1 oder 2, wobei das Ausstanzen des Sperr- und/oder Antriebsklinkenrohlings und das Ausschneiden der Klinkenzungen (14, 16) mittels des Laser- oder Wasserstrahls in derselben Maschine, vorzugsweise in derselben Aufspannung, erfolgt.

## Claims

1. Method for producing a detent and/or driving pawl (13, 15) for a slack adjuster (3) of a clutch device (1) for locking and/or rotating a drive pinion (11) which is provided on a rotatably mounted spindle drive (10) acting on a rotatable adjustment ring (7) and which has a toothed structure (12), wherein the detent and/or driving pawl (13, 15) has at least two pawl tongues (14, 16) which can be brought into alternating engagement with the toothed structure (12) of the drive pinion (11), **characterized in that** the pawl tongues (14, 16) are at least partially cut out of a detent and/or driving pawl blank by means of a laser or water jet, and the distance between two adjacent pawl tongues (14, 16) corresponds to the cutting width of the laser or water jet.

2. Method according to Claim 1, wherein the pawl tongues (14, 16) are cut out of the detent and/or driving pawl blank in succession by means of the laser or water jet.

3. Method according to Claim 1 or 2, wherein the punching-out of the detent and/or driving pawl blank and the cutting-out of the pawl tongues (14, 16) is carried out by means of the laser or water jet in the same machine, preferably in the same work-holding fixture.

## Revendications

1. Procédé de fabrication d'un cliquet d'arrêt et/ou d'entraînement (13, 15) pour un système de rattrapage d'usure (3) d'un dispositif d'accouplement (1) pour bloquer et/ou faire tourner un pignon d'entraînement (11) avec une structure dentée (12), pourvu d'un entraînement à broche (10) supporté à rotation, agissant sur une bague de réglage rotative (7), le cliquet d'arrêt et/ou d'entraînement (13, 15) présentant au moins deux langues de cliquet (14, 16) qui peuvent être amenées en engagement alterné avec la structure dentée (12) du pignon d'entraînement (11), **caractérisé en ce que** les langues de cliquet (14, 16) sont découpées au moins en partie au moyen d'un faisceau laser ou d'un jet d'eau à partir d'une ébauche de cliquet d'arrêt et/ou d'entraînement, et la distance entre deux langues de cliquet adjacentes (14, 16) correspond à la largeur de coupe du faisceau laser ou du jet d'eau.

2. Procédé selon la revendication 1, dans lequel les langues de cliquet (14, 16) sont découpées l'une après l'autre au moyen du faisceau laser ou du jet d'eau à partir de l'ébauche de cliquet d'arrêt et/ou d'entraînement.

3. Procédé selon la revendication 1 ou 2, dans lequel l'estampage de l'ébauche de cliquet d'arrêt et/ou d'entraînement et la découpe des langues de cliquet (14, 16) s'effectuent au moyen du faisceau laser ou du jet d'eau dans la même machine, de préférence en un seul paramétrage.
